# EUROPEAN PATENT SPECIFICATION

(11) **EP 0 578 215 B1**
(45) Date of publication and mention of the grant of the patent: **22.11.1995**
(21) Application number: 93110846.8
(22) Date of filing: 07.07.1993
(51) Int. Cl.: B27D 1/08, B27M 3/18, B30B 15/02, B29C 63/00

(54) **Panel veneering apparatus and process**
Vorrichtung und Verfahren zum Furnieren von Platten
Dispositif et procédé de placage de panneaux

(30) Priority: 10.07.1992 IT MI921680; 12.02.1993 IT MI930252
(43) Date of publication of application: 12.01.1994
(73) Proprietor: GIZIA S.p.A., I-31010 Paderno del Grappa, Treviso (IT)
(72) Inventor: Zanusso, Giambasilio, I-31010 Paderno del Grappa, (Treviso) (IT)
(74) Representative: Lunati, Vittoriano

(56) References cited:
- CH-A- 548 852
- FR-A- 2 634 682
- US-A- 3 431 601
- US-A- 3 661 688
- US-A- 3 825 642
- US-A- 4 913 639
- US-A- 5 032 206

## Description

The present invention relates to a panel veneering apparatus and process.

The apparatus and the process are defined in the preamble of the accompanying Claims 1 and 12 and disclosed in IT -B-1 234 377.

It is known that for manufacturing furniture doors, room doors and wood elements in general that while being of good quality also afford a reduced cost, panels are used which are made of wood conglomerates coated with layers or sheared pieces of valuable wood or other appropriate material.

The best finished and most agreeable panels of said type often have raised areas with respect to the surrounding regions: for example, they are thinned at an edge band so as to emphasize a central area having a greater thickness of appropriate shape.

Practically the panels in question are similar to those to be obtained with the traditional manufacturing craft methods, especially if they exhibit raised areas on both their main faces and said raised areas terminate with sharp-edged steps and are therefore emphasized to the greatest extent.

Therefore, the manufacturers of these panels do their best to give the maximum emphasis to said raised areas by producing wood chipboards or conglomerates provided with stepped recessed areas where the steps exhibit sharp edges as much as possible and by gluing and applying the coatings or veneers in such a manner that the corner edges are well apparent.

For achieving a stable adhesion of the coating layer to the panels provided with stepped areas, several processes and devices are known that are based on the use of presses and dies enabling the covering layers previously coated with an adhesive material to be pressed against the panel.

In particular, in many cases diaphragm presses are used, that is of the type disclosed in FR-A-2634682, having elastically deformable pressure surfaces that can be adapted to the panels' surfaces.

However these diaphragm presses are not capable of achieving a perfect adhesion between the coating layer and the panels at the stepped recessed areas having sharp edges, in that at these areas the diaphragm does not succeed in expanding to a sufficient degree for penetrating the step hollows.

In addition, if variations in the panel thickness are particularly marked, free areas are created in the step hollows during the pressing operation. These areas are devoid of a support and consequently are subjected to breakage during said pressing operation.

Furthermore, if the coating layer is very thin, as thin as 0.5 mm for example, and of soft wood such as walnut, cherry, chestnut, compression carried out by the diaphragm presses can easily give rise to surface unevennesses in the finished product, due to the fact that diaphragm presses, as they adapt at least partly to the panel surface characteristics, can enhance possible discontinuities and defects of the panel surfaces.

It is also known from US-A-5032206 to provide a special press, for applying an overlay to a workpiece, which includes multiple individually reciprocal and selectively controlled depressers actuatable to force the overlay in a progressively expanding area against the surface of the workpiece.

This special press operates on a single face of a workpiece and the multiple depressers on the whole substantially operate as the pressure surface of the diaphragm press.

Therefore also this special press does not achieve a perfect adhesion between the overlay and the workpiece at the stepped recessed areas having very sharp edges and the compression can give rise to surface unevennesses in the finished product, due to the fact that the press partly adapts to the workpiece surface characteristics.

In order to avoid the above drawbacks, traditional presses and preformed metal dies may be used that enable the covering layers previously coated with an adhesive material to adhere to the panels themselves even in the region of said stepped recessed areas, while at the same time maintaining in evidence the sharp edges of said recessed areas.

However, the installation costs to cope with when known presses and dies are used are very high, because to each panel shape and panel size a specific die having appropriate conformation and dimensions must correspond.

Attemps have been made, as disclosed in IT-B-1 234 377, to overcome this drawback through the use of metal dies to be obtained from the combination of parts and sections so as to enable adaptation of the dies to panels of several different dimensions.

This solution however imposes the storage of a wide variety of parts or sections in order to compose dies exactly conforming to all sizes intended for the panels to be veneered.

Therefore the costs for a complete installation can be high, above all in those cases in which several stocks of panels having different sizes from one stock to the other are to be coated.

Practically, the necessary operations for finding, replacing and assembling the new die sections and put the preceding ones in stock, make the known panel coating procedures arduous and generally expensive.

In addition, in order to enable said sections to be arranged and secured according to the intended conformations, either auxiliary support structures are required or the sections are to be directly engaged to the base plate of the press.

When said sections are engaged to auxiliary structures, the operations to be carried out are very arduous and they adversely affect the production rates, whereas when said sections are directly fastened to the plate of a press it is necessary to pierce holes thereinto and thus the press undergoes undesired permanent modifications.

The above drawbacks are very important when the panels to be coated have two main faces and both faces have said raised areas with sharp-edged steps.

In this case the complexity and laboriousness of the operations to be carried out grow to such an extent that said double-faced panels are preferably made by combining two single-faced panels together by gluing.

Under this situation the technical task underlying the present invention is to provide a panel veneering apparatus and process capable of substantially eliminating the above drawbacks.

The technical task specified is essentially achieved by a panel veneering apparatus and process as claimed in Claims 1 and 12. Preferred embodiments of the invention are specified in Claims 2 to 11.

The description of two preferred embodiments of the invention is given hereinafter with reference to the accompanying drawings, in which:
Figure 1 is a perspective view of one die half being part of a die made in accordance with one embodiment of the invention,
Figure 2 shows some components of the die half seen in Figure 1 and of a second die half to be superposed on the first one;
Figure 3 shows a detail of the die half of Figure 1;
Figure 4 is a section of the die of the invention taken along line IV-IV in Figure 1;
Figures 5 and 6 are exploded sectional views of the die seen in a tightening position in a press, taken along line V-V in Figure 1;
Figure 7 is a perspective view of two die halves designed to mate with each other by overturning so as to form a die in accordance with a second preferred embodiment of the invention; and
Figures 8, 9 and 10 are perspective views of sections and components of the die halves shown in Figure 7.

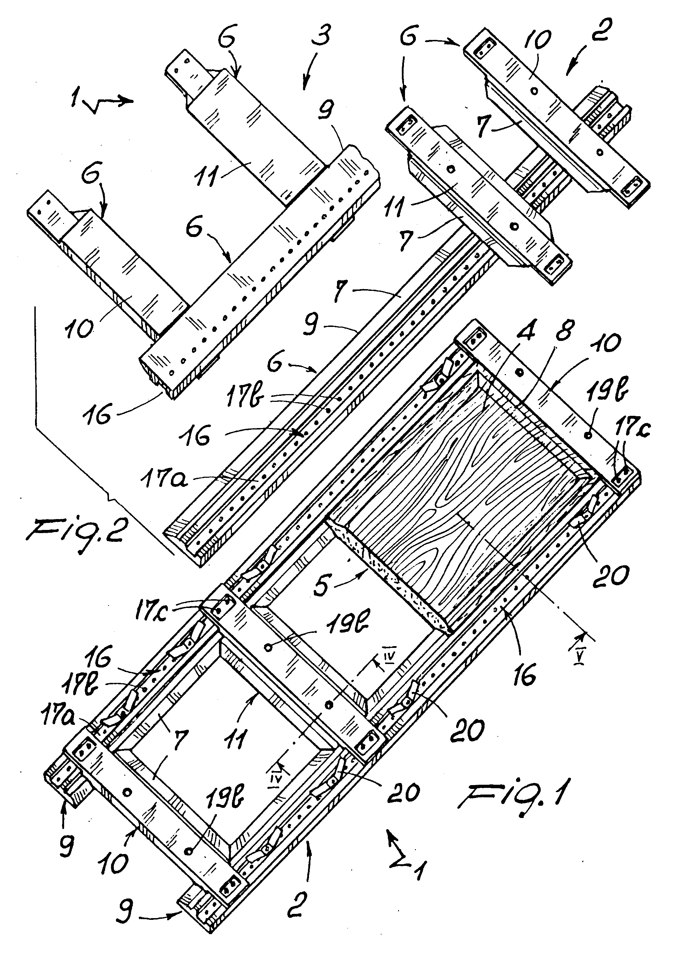

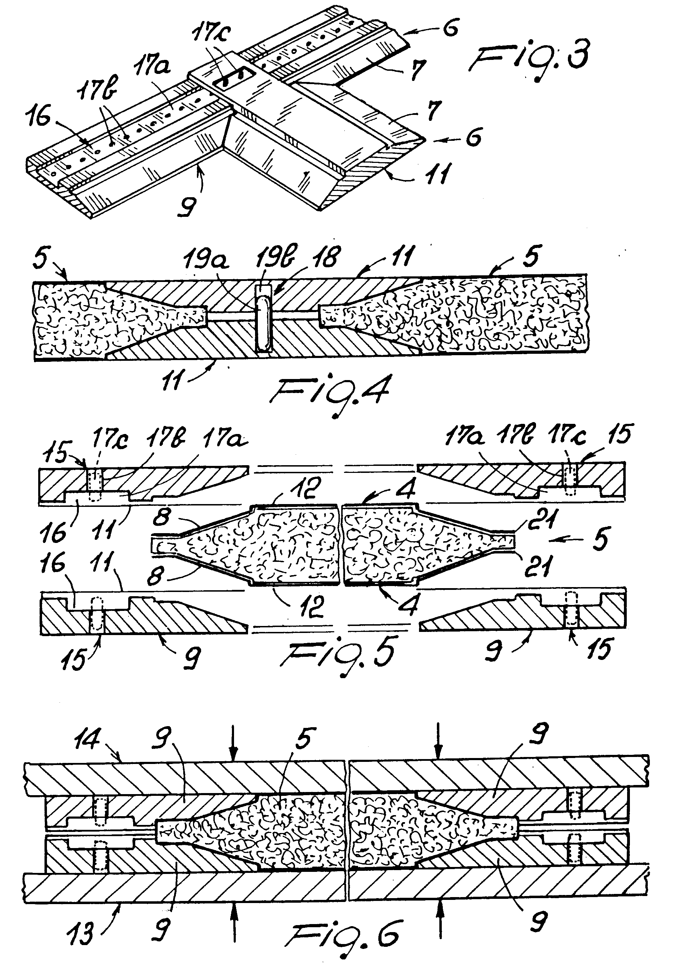

Referring to the first preferred embodiment, shown in Figures 1 to 6, the apparatus of the invention includes a die denoted by 1. It comprises first and second die halves identified by 2 and 3 respectively, which are identical with each other if both the main opposite faces 4 of one or more panels 5 are identical with each other too.

Each die half 2, 3 is formed with a plurality of combining shaped bodies 6 exhibiting mating active areas 7 complementary and mating with surfaces corresponding to recessed edge portions 8 of one or more panels 5.

Each shaped body 6 has a main extension direction, which in the cases shown is also the major extension direction, parallel to an edge of at least one panel 5.

Practically, the shaped bodies 6 encircle the recessed edge portions 8 of the panels leaving the raised areas in the centre of the faces 4, free.

More particularly, the shaped bodies 6, for each die half comprise a pair of longitudinal members 9 that in their major extension directions have longitudinal lengths greater than the sum of the lengths of two consecutive panels intended of the greatest sizes.

In fact the longitudinal members 9 extend, in the case of correspondingly opposite door panels for example, substantially over at least one length corresponding to the overall height of the doors, so as to simulate the real mutual arrangement of the door panels already in the veneering step thereby correctly aligning the veins of the coating layers when they consist of sheared wood pieces.

The longitudinal members 9 are joined together by trasverse slidable bars to be located at a plurality of positions.

Said transverse bars comprise a pair of terminal transverse bars 10 and one or more intermediate transverse bars 11, depending on whether two or more panels 5 are to be veneered simultaneously.

On each intermediate transverse bar 11 the shapes of the active areas 7 match those of the recessed areas defining the edge portions 8 of two adiacent panels 5 in alignment between the longitudinal members 9.

In addition, the combining shaped bodies 6 define die halves 2 and 3 open at the central raised areas 12 of each panel 5 so as to enable a direct contact, and therefore a direct pressure, between said raised areas and a plate 13 and counter-plate 14 of a press used for the veneering operations.

In fact, the thickness of the shaped bodies 6, the die halves 2 and 3 and the whole die when said die incorporates one panel 5, is such that it can afford an overall thickness equal to the maximum thickness of the panel 5, when the die halves 2 and 3 are tightened in the press.

Also provided is a means 15 for the direct and detachable engagement between the shaped bodies 6 of each die half 2 and 3, which means comprises locating tracks 16.

The tracks 16 are formed parallel to said major extension direction and are adapted to guide the positioning of the shaped bodies 6.

The tracks 16 are embodied by hollow guide channels 17a and adapted to slidably house guide projections, and by seatings 17b for locking pegs 17c which globally delineate sliding lines and engagement points of the shaped bodies 6.

In the embodiments shown the seatings 17b are disposed along the guide channels 17a.

The mutual positioning and direct connection between the die halves 2 and 3 is made by means of connecting members 18 defined by pins 19a and respective pin holes 19b, for example.

Practically, the engagement means 15 and connecting members 18 on the one hand can be slidably buried in the shaped bodies so that they do not hinder pressing and, on the other hand, form a substantially self-bearing die that can be freely positioned.

Finally, provision is made for flexibile centering members 20 to be applied to the die halves, consisting of compressible blades and adapted to guide the insertion of the panels 5 in the die halves.

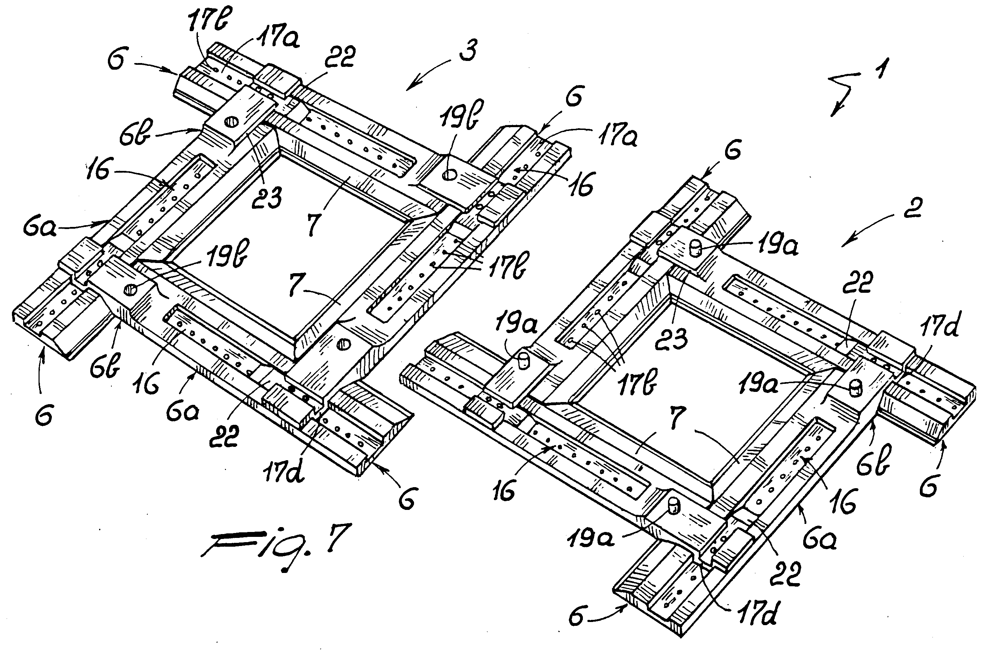

In addition, denoted by 21 in Figure 5 are coating layers to be applied to the panels 5.

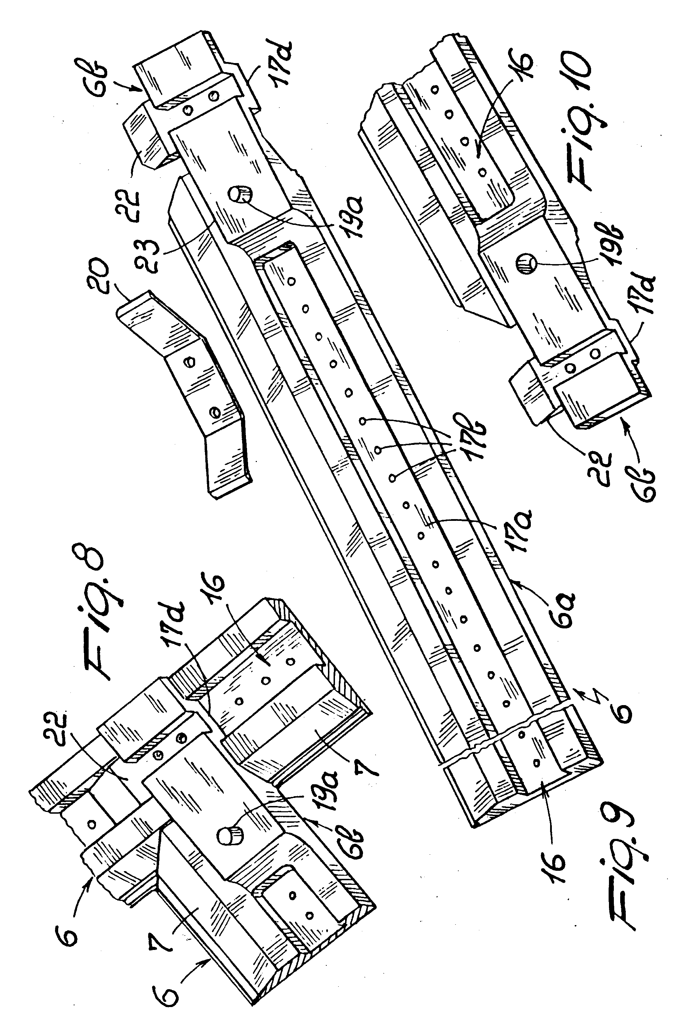

The second preferred embodiment shown in Figures 7 to 10 is similar to the first one and adapted to veneer a single panel of varying sizes.

The two die halves 2 and 3 in Figure 7 are substantially identical in mirror image relationship so that the second die, overturned, perfectly matches the first die and can be directly engaged therewith and they jointly form a single veneering die for a panel 5 to be coated.

The shaped bodies 6 are all identical with each other and can be combined together and detachably engaged with each other according to a plurality of positions to be selected depending on the panel 5 sizes.

If for example the panel to be coated has a rectangular or square shape, each die half comprises four shaped bodies disposed in succession so as to form a differently expandable closed ring or frame.

In greater detail each shaped body 6 comprises one portion 6a in which a locating track 16 is formed, and a second portion 6b in which a guide projection 17d is formed which can be slidably coupled with a guide channel 17a belonging to another similar shaped body 6.

Practically, the guide channel 17a of each shaped body 6 and the guide projection 17d of another shaped body are such shaped and susceptible of engagement with each other that a mutually transverse orientation and sliding is allowed between two consecutive shaped bodies, with reference to the directions of major extension of said bodies.

The guide projection 17d is also provided with a stabilization tailpiece 22 insertable to a tight fit in the locating tracks 16.

In addition the second portion 6b has an abutment shoulder 23 for an edge of the panel 5 adapted to exactly position said panel.

The use of the panel veneering apparatus of the invention is the following.

In the embodiment shown in figures 1 to 6, depending on the sizes of the panels to be veneered the distance between the longitudinal members 9 is established by positioning the transverse bars 10 and 11 therebetween in the required number and locking them by the engagement means 15.

Both die halves 2 and 3 being thus formed, the panels 5 previously covered with the provided coating layers, are disposed on the first die half 2 designed to be located on the lower plate 13.

After superposing the second die half 3 on the first die half 2 and correctly joining the die halves together by the connecting members 18, a single veneering die is obtained which is easily and readily available on the press plate 13 where it must only rest, no outer connection being required.

The pressing action exerted by the counter-plate 14 enables the coating layers to be perfectly glued to the respective panels. If in the panels the size parallel to the longitudinal members changes, it is sufficient to vary the distance between the transverse bars 10 and 11 in order to adapt the die halves 2 and 3 to the new dimensions, without being necessary to resort to other different components.

If on the contrary it is the panel width that changes, the transverse bars 10 and 11 are replaced by other transverse bar of appropriate length.

In the embodiments shown in Figures 7 to 10, the die halves 2 and 3 are combined depending on the sizes of the panels to be veneered and the position of each shaped body 6 relative to the adjacent shaped body is established by sliding of the guide projections 17d in the guide channels 17a.

The stabilization tailpieces 22 help in perfectly orienting the shaped bodies 6 with respect to each other: the die halves thus formed have therefore a very precise conformation adapted to correspond to a tight fit with the edge portions 8 of the panels 5.

If in the panels to be coated one or both of the main sizes thereof are changed, it is sufficient to adapt the die halves 2 and 3 to the new dimensions, without being obliged to resort to any further components.

In accordance with the invention also a panel veneering process is accomplished.

The process consists in first arranging one or more panels having raised areas on both faces, on one die half. The panel placed on the die half has its main faces coated with a thin film of adhesive material and with very thin coating layers, sheared pieces of valuable wood for example.

Then, a second die half is superposed on the panel or panels by removably and directly coupling the last mentioned die half with the former so as to form a single composite veneering die, the panels being inserted therebetween.

The cited die halves are obtained by making appropriate combining shaped bodies slide relative to each other and then removably locking them without the aid of any links or auxiliary outer elements.

Subsequently the veneering die is inserted in a press by laying it down freely at any position within the plate or working surface of the plate.

By moving a counter-plate of the press close to the work plate, the panels are forcibly tightened between the die halves, and the coating layers are simultaneously and fixedly fastened by gluing to the two faces thereof.

The raised areas of the panels are submitted to direct pressures exerted by the plate and counter-plate of the press, whereas the recessed areas, brought into contact with the die halves, are subjected to the pressures exerted through the die halves.

The invention achieves important advantages.

In fact the conceived die enables the intervention of outer auxiliary elements to be avoided at least in most cases for forming dies of appropriate sizes. The shaped bodies themselves in fact can give origin to different dies by mere mutual sliding and fastening through pegs and pins.

Even when big changes in the panel sizes occur, the necessary operations are reduced to a minimum, so that the overall veneering costs are not very high.

It is pointed out that not only the accomplishment of a die does not involve structural modifications to the presses used, but also that, being the dies completely independent of the presses, said dies can be arranged in various positions and amounts on the presses, and can even be set up externally of the presses.

In other words, the whole press surface is used for several dies disposed close to each other and the production can be greatly increased by setting up the dies externally of the presses and therefore making the presses work almost without pauses.

The die is adapted to veneer panels, in particular for window and door frames comprising a unitary body made of chipboard wood having its main opposite faces even greatly shaped and sharp edged, as well as coatings of reduced thickness, even as thin as 0.5 mm, made of valuable and even very soft wood, selected in particular from cherry, chestnut and walnut.

## Claims

1. A panel veneering apparatus, the panels (5) to be veneered having raised areas (12) on the two main faces (4) and edge portions (8) which are recessed relative to said raised areas,
- the apparatus comprising a plurality of shaped bodies (6) and each shaped body having a shape matching that of a said recessed edge portion (8), characterized in that it comprises:
- first and second die halves (2, 3) to be positioned on and mating with opposite faces of said recessed edge portions (8), each die half being susceptible of mutual engagement in a manner adapted to form one die (1) incorporating at least one of said panels (5) for subsequent insertion in a press, and
- means (15) for the mutual engagement of said shaped bodies (6) adapted to form each said die half (2, 3) and adapted to allow a plurality of engagement positions for accomplishing differentely sized die halves (2, 3).

2. A panel veneering apparatus according to Claim 1, in which, when said die halves (2, 3) are tightened on one of said panels (5) by means of said press, the overall thickness of said die (1) is equal to the maximum thickness of said panel (5), in a direction perpendicular to said faces (4), said shaped bodies (6) encircling said recessed edge portions (8), and said raised areas (12) being in direct contact with said press.

3. A panel veneering apparatus according to Claim 1, in which said shaped bodies (6) exhibit major extension directions parallel to the edges of said panels (5) and in which said engagement means (15) forms locating tracks (16) parallel to said major extension directions and adapted to guide a mutual positioning of said shaped bodies (6).

4. A panel veneering apparatus according to Claim 3, in which said engagement means (15) consists of hollow guide channels (17a) formed in said shaped bodies (6), guide projections (17d) integral with said shaped bodies (6) and slidably insertable in said guide channels (17a), seatings (17b) arranged close to said guide channels (17a), and removable locking pegs (17c) detachably insertable in said seatings (17b), said guide channels (17a) and seatings (17b) embodying said locating tracks (16).

5. A panel veneering apparatus according to Claim 1, in which said shaped bodies (6) comprise for each die half (2, 3), a pair of longitudinal members (9) and at least two transverse bars (10, 11) adapted to join up said longitudinal members (9), said transverse bars (10, 11) being slidable parallelly of said longitudinal members (9) and said longitudinal members (9) having longitudinal lengths in their major extension directions that perfectly fit panels (5) of the maximum intended sizes.

6. A panel veneering apparatus according to Claim 5, in which said transverse bars (10, 11) comprise a pair of terminal transverse bars (10) and one intermediate transverse bar (11) disposed between two of said panels (5) aligned between said longitudinal members (9).

7. A panel veneering apparatus according to Claim 1, in which said die halves (2, 3) are mutually engaged by connecting members (18) enabling a direct connection through pins (19a) to be buried between said die halves (2, 3).

8. A panel veneering apparatus according to Claim 7, in which said connecting members (18) and engagement means (15) define a self-bearing die that can be freely displaced when in its assembled condition.

9. A panel veneering apparatus according to Claim 1, in which said shaped bodies (6) can be detachably engaged with each other in a plurality of positions defining die halves (2, 3) having as a whole the shape of a suitably adjustable and expansible ring.

10. A panel veneering apparatus according to Claims 4 and 9, in which each of said shaped bodies (6) has one section (6a) in which said locating track (16) is formed and a second section (6b) consecutive to the first section (6a), in which said guide projection (17d) to be inserted in the locating track (16) of a similar shaped body (6) is disposed.

11. A panel veneering apparatus according to Claim 10, in which each of said die halves (2, 3) comprises four of said shaped bodies (6) equal to each other.

12. A panel veneering process, characterized in that the panels (5) to be veneered have raised areas (12) on the two main faces (4) and edge portions (8) which are recessed relative to said raised areas (12), the process comprising:
- forming a first and a second die half (2, 3) the dimensions of which correspond to those of at least one panel (5) to be veneered, through the relative sliding and subsequent removable locking of shaped bodies (6) having their main extension directions parallel to and shaped to match the edge portions (8) of said panel (5),
- inserting said at least one panel (5) with two coating layers, one adjacent to each of said main faces (4), between said first and second die halves (2, 3) and directly coupling said die halves (2, 3) with each other, in a manner adapted to form a single die (1) incorporating said panel (5), and
- tightening said die halves (2, 3) in a press for making said two coating layers adhere to said faces (4) of said panel (5) all in one go,
- said raised areas of said panel (5) being submitted to direct pressure by said press and said edge portions (8) being submitted to pressure by said die halves (2, 3).

## Patentansprüche

1. Vorrichtung zum Furnieren von Platten, wobei die zu furnierenden Platten (5) auf den beiden Hauptflächen (4) erhöhte Bereiche (12) und Randbereiche (8) aufweisen, welche gegenüber den erhöhten Bereichen zurückspringen,
- wobei die Vorrichtung eine Mehrzahl von profilierten Körpern (6) umfasst, und jeder dieser Körper so geformt ist, dass er sich den zurückspringenden Randbereichen (8) anpasst, dadurch gekennzeichnet, dass die Vorrichtung
- erste und zweite auf den Gegenflächen der zurückspringenden Randbereiche (8) anzuordnende zu diesen passende Formhälften (2,3) umfasst, wobei die Formhälften jeweils so miteinander verbunden werden können, dass sie eine Form (1) bilden, die zumindest eine der zu einem späteren Zeitpunkt in eine Presse einzulegenden Platten (5) umschliesst, sowie
- Mittel (15) zur Verbindung der profilierten Körper (6) miteinander, die so ausgebildet sind, dass die einzelnen Formhälften (2,3) gebildet und eine Mehrzahl von Verbindungspositionen ermöglicht werden, um verschieden grosse Formhälften (2,3) zu bilden.

2. Vorrichtung zum Furnieren von Platten gemäss Anspruch 1, bei der, wenn die Formhälften (2,3) mithilfe der Presse auf eine der Platten (5) gespannt sind, die Gesamtstärke der Form (1) der maximalen Stärke der Platte (5) entspricht, senkrecht zu den Flächen (4), wobei die profilierten Körper (6) die zurückspringenden Randbereiche (8) umschliessen, und die erhöhten Bereiche (12) direkt mit der Presse in Kontakt stehen.

3. Vorrichtung zum Furnieren von Platten nach Anspruch 1, bei der sich die profilierten Körper (6) hauptsächlich parallel zu den Rändern der Platten (5) erstrecken, und bei der die Eingriffsmittel (15) Positionierungsbahnen (16) bilden, die parallel zu den gennanten Haupterstreckungsrichtungen liegen und zur Führung einer gegenseitigen Positionierung der profilierten Körper (6) dienen.

4. Vorrichtung zum Furnieren von Platten nach Anspruch 3, bei der die Eingriffsmittel (15) aus in den profilierten Körpern (6) ausgebildeten hohlen Fuhrungskanälen (17a), aus einstückig mit den profilierten Körpern (6) ausgebildeten, durch eine gleitende Bewegung in die Führungskanäle (17a) einführbaren Führungserhöhungen (17d), aus in den Führungskanälen (17a) angeordneten Aufnahmen (17b) und aus abnehmbaren, lösbar in die gennanten Aufnahmen (17b) einsteckbaren Befestigungsstifen (17c) bestehen, wobei die Führungskanäle (17a) und Aufnahmen (17b) die Positionierungsbahnen (16) umfassen.

5. Vorrichtung zum Furnieren von Platten nach Anspruch 1, bei der die profilierten Körper (6) jeweils für eine Formhälfte (2,3) ein Paar Längsträger (9) und zumindest zwei Querträger (10,11) umfassen, die dazu dienen, die Längsträger (9) zu verbinden, wobei die Querträger (10,11) parallel zu den Längsträgern (9) verschoben werden können, und die Längsträger (9) in den Haupterstreckungsrichtungen eine solche Länge aufweisen, dass sie perfekt auf Platten (5) mit den maximal möglichen Abmessungen passen.

6. Vorrichtung zum Furnieren von Platten nach Anspruch 5, bei der die Querträger (10,11) ein Paar Endquerträger (10) und einen Zwischenquerträger (11) umfassen, der zwischen zwei Platten (5) angeordnet ist, die zwischen den Längsträgern (9) ausgerichtet sind.

7. Vorrichtung zum Furnieren von Platten nach Anspruch 1, bei der die Formhälften (2,3) durch Verbindungselemente (18) direkt miteinander verbunden werden, welche aus in die Formhälften (2,3) zu steckenden Stiften (19a) bestehen.

8. Vorrichtung zum Furnieren von Platten nach Anspruch 7, bei der die Verbindungselemente (18) und Eingriffsmittel (15) eine selbsttragende Form bilden, die in montiertem Zustand frei verschoben werden kann.

9. Vorrichtung zum Furnieren von Platten nach Anspruch 1, bei der die profilierten Körper (6) lösbar miteinander in einer Mehrzahl von Positionen verbunden werden können, wobei Formhälften (2,3) gebildet werden, die insgesamt in Form eines anpass- und ausdehnbaren Ringes ausgebildet sind.

10. Vorrichtung zum Furnieren von Platten nach Anspruch 4 und 9, bei der die profilierten Körper (6) jeweils einen Bereich (6a) aufweisen, in der die Positionierungsbahn (16) ausgebildet ist, und einen zweiten sich an den ersten Bereich (6a) anschliessenden Bereich (6b), in dem die in die Positionierungsbahn (16) eines entsprechenden profilierten Körpers (6) einzuführende Führungserhöhung (17d) ausgebildet ist.

11. Vorrichtung zum Furnieren von Platten nach Anspruch 10, bei der die Formhälften (2,3) jeweils vier einander entsprechende profilierte Körper (6) umfassen.

12. Verfahren zum Furnieren von Platten, dadurch gekennzeichnet, dass die zu furnierenden Platten (5) auf den beiden Hauptflächen (4) erhöhte Bereiche (12) und Randbereiche (8) aufweisen, die gegenüber den erhöhten Bereichen (12) zurückspringen, wobei das Verfahren daraus besteht, dass:
- eine erste und eine zweite Formhälfte (2,3), deren Abmessungen denjenigen zumindest einer zu furnierenden Platte (5) entsprechen, durch Verschieben und späteres lösbares Befestigen der profilierten Körper (6) gebildet werden, welche Körper sich hauptsächlich parallel zu den Randbereichen (8) der Platte (5) erstrecken und eine sich diesen anpassende Form aufweisen,
- zumindest eine Platte (5) mit zwei sich jeweils an die Hauptflächen (4) anschliessenden Beschichtungslagen zwischen die erste und die zweite Formhälfte (2,3) eingelegt wird und dass die Formhälften (2,3) direkt miteinander verbunden werden, so dass eine einzige die Platte (5) umschliessende Form (1) gebildet wird, und
- die Formhälften (2,3) in einer Presse festgezogen werden, so dass die Beschichtungslagen in einem einzigen Zuge fest mit den Flächen (4) der Platte (5) verhaften,
- die erhöhten Bereiche der Platte (5) dem direkten Druck der Presse ausgesetzt und die Randbereiche (8) dem Druck der Formhälften (2,3) ausgesetzt sind.

## Revendications

1. Dispositif de placage de panneaux, les panneaux (5) à plaquer ayant des aires en relief (12) sur les deux faces principales (4) et des portions de bord (8) qui sont en retrait par rapport auxdites aires en relief,
- le dispositif comprenant une pluralité de corps conformés (6) et chaque corps conformé ayant une forme épousant celle de ladite portion de bord en retrait (8), caractérisé en ce qu'il comporte:
- des premières et deuxièmes demi-matrices (2, 3) à positionner sur, et s'adaptant exactement aux faces opposées desdites portions de bord en retrait (8), chaque demi-matrice étant susceptible d'engagement réciproque de manière apte à former une matrice (1) incorporant au moins un desdits panneaux (5) pour la subséquente introduction dans une presse, et
- des moyens (15) pour l'engagement réciproque desdits corps conformés (6), chacun destiné a former ladite demi-matrice (2, 3) et susceptibles de permettre une pluralité de positions d'engagement pour réaliser des demi-matrices (2, 3) de dimensions différentes.

2. Dispositif de placage de panneaux suivant la revendication 1, dans lequel, quand lesdites demimatrices (2, 3) sont serrées sur un desdits panneaux (5) par ladite presse, l'épaisseur globale de ladite matrice (1) est égale à l'épaisseur maximum dudit panneau (5), dans une direction perpendiculaire auxdites faces (4), lesdits corps conformés (6) entourant lesdites portions de bord (8) en retrait, et lesdites aires en relief (12) étant directement en contact avec ladite presse.

3. Dispositif de placage de panneaux selon la revendication 1, dans lequel lesdits corps conformés (6) présentent leurs directions de plus grande extension parallèles aux bords desdits panneaux (5) et dans lequel lesdits moyens d'engagement (15) forment des guidages de positionnement (16) parallèles auxdites directions de plus grande extension et destinés à guider la mise en place réciproque desdits corps conformés (6).

4. Dispositif de placage de panneaux selon la revendication 3, dans lequel lesdits moyens d'engagement (15) comportent des canaux creux de guidage (17a) formés dans lesdits corps conformés (6), des saillies de guidage (17d) solidares desdits corps conformés (6) et insérables de manière coulissante dans lesdits canaux de guidage (17a), des logements (17b) disposés proches desdits canaux de guidage (17a), et des chevilles amovibles de blocage (17c) insérables de manière détachable dans lesdits logements (17b), lesdits canaux de guidage (17a) et logements (17b) matérialisant lesdits guidages de positionnement (16).

5. Dispositif de placage de panneaux suivant la revendication 1, dans lequel lesdits corps conformés (6) comportent, pour chaque demi-matrice (2, 3), une paire d'éléments longitudinaux (9) et au moins deux barres transversales (10, 11) destinées à unir lesdits éléments longitudinaux (9), lesdites barres transversales (10, 11) étant susceptibles de coulissement parallèlement auxdits éléments longitudinaux (9) et la longueur longitudinale desdits éléments longitudinaux (9) dans leurs directions de plus grande extension étant suffisante à permettre l'introduction de panneaux (5) ayant les dimensions maximales prévues.

6. Dispositif de placage de panneaux suivant la revendication 5, dans lequel lesdites barres transversales (10, 11) comportent une paire de barres transversales terminales (10) et une barre transversaie intermédiaire (11) disposée entre deux desdits panneaux (5) alignés entre lesdits éléments longitudinaux (9).

7. Dispositif de placage de panneaux suivant la revendication 1, dans lequel lesdites demi-matrices (2, 3) sont engagées réciproquement par des éléments de liaison (18) permettant une liaison directe par l'intermédiaire de goupilles à noyer dans lesdites demi-matrices (2, 3).

8. Dispositif de placage de panneaux suivant la revendication 7, dans lequel lesdits éléments de liaison (18) et lesdits moyens d'engagement (15) définissent une matrice autoporteuse qui peut être déplacée librement quand elle est dans sa condition assemblée.

9. Dispositif de placage de panneaux suivant la revendication 1, dans lequel lesdits corps conformés (6) peuvent être engagés réciproquement de manière détachable selon une pluralité de positions définissant des demi-matrices (2, 3) qui ont dans leur ensemble la forme d'un anneau convenablement réglable et expansible.

10. Dispositif de placage de panneaux suivant les revendications 4 et 9, dans lequel chacun desdits corps conformés (6) a une première section (6a) dans laquelle sont formés lesdits guidages de positionnement (16) et une deuxième section (6b) attenant à la première section (6a), dans laquelle est disposée ladite saillie de guidage (17d) à insérer dans les guidages de positionnement (16) d'un autre corps conformé (6) analogue.

11. Dispositif de placage de panneaux suivant la revendication 10, dans lequel chacune desdites demi-matrices (2, 3) prévoit quatre corps conformés (4) égaux les uns aux autres.

12. Procédé de placage de panneaux caractérisé en ce que les panneaux (5) à plaquer ont des aires en relief (12) sur leurs deux faces principales (4) et des portions de bord (8) qui sont en retrait par rapport auxdites aires en relief (12), le procédé comportant les étapes suivantes:
- formation d'une première et d'une deuxième demi-matrices, dont les dimensions correspondent à celles d'au moins un panneau (5) à plaquer, par le coulissement relatif et le subséquent blocage amovible des corps conformés (6) ayant leurs directions de plus grande extension parallèles à, et de forme adaptée à épouser celle des portions de bord (8) dudit panneau (5),
- introduction dudit au moins un panneau (5), avec deux feuilles de revêtement dont chacune est attenante à une desdites faces principales (4), entre lesdites première et deuxième demi-matrices (2, 3) et couplage direct desdites demi-matrices (2, 3), de manière à former une seule matrice (1) incorporant ledit panneau (5), et
- serrage desdites demi-matrices (2, 3) dans une presse pour causer l'adhésion d'un seul coup desdites deux feuilles de revêtement auxdites faces (4) dudit panneau (5),
- lesdites aires en relief dudit panneau (5) étant soumises à une pression directe par ladite presse et lesdites portions de bord (B) étant soumises à pression par lesdites demi-matrices (2, 3).
